# EUROPEAN PATENT SPECIFICATION

(11) **EP 1 532 798 B1**
(45) Date of publication and mention of the grant of the patent: **22.01.2014**
(21) Application number: 03732656.8
(22) Date of filing: 23.05.2003
(51) Int. Cl.: H04L 29/12, H04L 12/28, H04L 12/24

(54) **METHOD AND SYSTEM FOR CONTROLLING A PLURALITY OF DEVICES CONNECTED TO A NETWORK**
VERFAHREN UND SYSTEM ZUR STEUERUNG EINER VIELZAHL MIT EINEM NETZWERK VERBUNDENER EINRICHTUNGEN
RESEAUTAGE DE PERIPHERIQUES

(30) Priority: 07.06.2002 GB 0213064
(43) Date of publication of application: 25.05.2005
(60) Divisional application: 12192287.6
(73) Proprietor: Exterity Limited, Dalgety Bay Fife KY11 9JD (GB)
(72) Inventor: ALLAN, Mike, Exterity Limited, Limekilns, Dunfermline KY11 3LA (GB); FARQUHAR, Colin, Exterity Limited, Limkilns, Dunferline KY11 3LA (GB)
(74) Representative: Cooper, John
(86) International application number: PCT/GB2003/002262
(87) International publication number: WO 2003/105446

(56) References cited:
- WO-A-01/05158
- WO-A-01/80554
- US-B1- 6 301 223

## Description

The present invention relates to networking of devices, in particular to a method and system for controlling a plurality of devices; sockets for connecting a device or devices to a network; and methods and means for controlling a device connected to a network.

There is a desire among private homeowners and businesses to achieve a functional integration of the various devices used in the home or business.

However, there are problems associated with integrating existing devices into a single network. Existing ethernet solutions do not offer enough flexibility to interconnect many different types of devices in an integrated and uniform fashion. Current attempts to solve these issues need complex, messy and expensive wiring solutions.

For example WO01/80554 discloses the integration of WEB-based electronic program guide (EPG) features with other TV functions.

According to a first aspect of the present invention there is provided a method for controlling a plurality of devices comprising the steps of:
connecting the devices to a network through a socket which comprises a network interface component and a device interface component;
assigning an internet protocol (IP) address to each device;
administering the functions of the network by means of a central network server; and
providing controller means for controlling at least one of the devices;
such that device control signals and device data signals can pass over the network.

According to a second aspect of the present invention, there is provided a system for controlling a plurality of devices comprising;
a network that interconnects the devices;
a central network server that assigns an internet protocol (IP) address to each device;
a socket comprising a network interface component and a device interface component, with each device being connectable to a socket; and
controller means for controlling at least one of the devices; and wherein
device control signals and device data signals are capable of being passed over the network.

Preferably, the data signals from one device are transmitted over the network to be received and output by another device.

Preferably, software is provided which functions as a user control interface to enable a user to manipulate the central network server to control the devices

Preferably, the software enables individual carrier frequencies to be picked out from a bouquet of incoming television signals such that a plurality of carrier frequencies can be simultaneously distributed to separate devices.

Preferably, each individually picked out carrier frequency corresponds to one television channel.

Preferably, the network is a wired local area network.

The invention is particularly envisaged as being incorporated in the form of a CAT5 wired ethernet, although the principles of the invention are independent of the physical network layer used.

Optionally, the network is a data over mains network.

Optionally, the network is a wireless network.

In particular, a wireless communication protocol such as a suitable 802.11 specification may be used.

Preferably, the socket is substantially flush with a wall.

Preferably, the device interface component is of a suitable form for the attachment of a device to the network without any modification having to be performed to the device.

Preferably, the devices are electronic devices.

According to a third aspect of the present invention there is provided a socket for connecting a device to a network, comprising a network interface component and at least one device interface component, wherein the interface components take the form of independent devices that are removably conjoined.

Preferably, the socket comprises circuitry that is capable of modulating and transforming data signals.

Preferably, the circuitry manipulates the data signals from a specific device such that the device is able to transmit the data signals through the socket to a network.

Preferably, the network interface component has a back end for connection to a network and a front end that functions as a generic socket which is able to receive the device interface component.

Preferably, the back end can take a form suitable for connection with a specific type of network.

For example, the network used could be a wired ethernet which may or may not incorporate Power-Over-Ethernet (PoE) functionality, a wireless network with signals sent by RF or 802.11 wireless communication protocols, or a data over mains network. The network interface component would have an appropriate connector or receptor to receive data and/or power from the network. No matter what network is actually used, the power and/or data is able to be transmitted through the front end, which takes the same generic form for each specific design of a device to be attached to the network interface component.

Preferably, the device interface component has a back end for connection with a front end of the network interface component, and a front end for connection with a device.

Optionally, the device interface component is provided within the device.

Preferably, the device interface component comprises an IR port.

Preferably, the IR port is capable of driving a remote LED.

Preferably, the device interface component further comprises means for transmitting control signals from the device interface component to the device.

Preferably, said means is implemented in the form of an optical device;
the device interface component transmits device control signals over a fibre-optic cable to the optical device; and
the fibre optic device is of a form such that signals emerging from the cable are reflected into an IR receiver of the device to be controlled.

Preferably, the fibre optic device is also transparent to control signals sent from a secondary control means, the secondary control means being the native control means supplied by the makers of the device for the controlling the device.

According to a fourth aspect of the present invention, there is provided a socket gang comprising a back end suitable to be connected to the front end of a network interface component, and a front end that comprises a plurality of generic sockets, each being suitable for connection to a back end of a device interface component.

Preferably, the socket gang further comprises an ethernet switch to govern the passage of signals to and from the devices that are connected to it, in use.

Preferably, the socket gang comprises a power meter.

Preferably, the power meter is provided in the form of a bar LED.

Preferably, the socket gang comprises a bandwidth meter.

Preferably, the bandwidth meter is provided in the form of a bar LED.

According to a fifth aspect of the present invention, there is provided a device controller capable of downloading device control protocols from a remote server, and of using the device control protocols to control at least one device which is connected to a network.

Preferably, the device controller is capable of transmitting command signals that result in data streams from one device connected to the network being sent for reception by and output from a different device connected to the network.

Preferably, the device controller comprises means to select a particular type of device to be controlled.

Preferably, the device controller comprises a microphone to enable voice recognition technology to be used for receiving commands.

Preferably, the device controller comprises an LCD display screen.

Preferably, a message representing the particular type of device that is selected can be displayed on the LCD display screen.

Preferably, the device controller has an appearance similar to a conventional remote control device.

Optionally, the device controller comprises a PDA type device.

Preferably, the PDA type device has a graphical user interface (GUI) to provide an icon based menu system for enabling flexible control of the devices.

According to a sixth aspect of the present invention, there is provided a method of controlling a device connected to a network, wherein:
a server is provided with a database of device control protocols;
the server is provided with a database that correlates devices with specific physical locations;
a device control means interrogates the server to download and store the device control protocols;
the device control means enables the user to select a location;
the device control means activates device control protocols relevant to the devices in that specific location.

Preferably, the device control means transmits a command signal which initiates transfer of data signals from one device to another over the network.

According to a seventh aspect of the present invention, there is provided a method of controlling a device connected to a network, wherein:
a server is provided with a database of device control protocols;
the server is provided with a database that correlates devices with specific physical locations;
a device control means is activated to send a command signal to the server;
the server downloads appropriate device control protocols to the device control means; and
the device control uses the device control protocols to send a command signal to the relevant device.

Preferably, the device control means has device type selection means.

Preferably, the location of the device control means is detected automatically by the server upon transmission of the command signal from the device control means to the server.

These and other objects and advantages are provided by a method and a system according to the appended claims 1 and 9.

Preferred embodiments are defined in the dependent claims.
Fig. 1 illustrates a first aspect of the present invention;
Fig. 2 illustrates a third aspect of the present invention;
Fig. 3 illustrates a fourth aspect of the present invention; and
Fig. 4 illustrates the operation of a fifth aspect of the present invention.

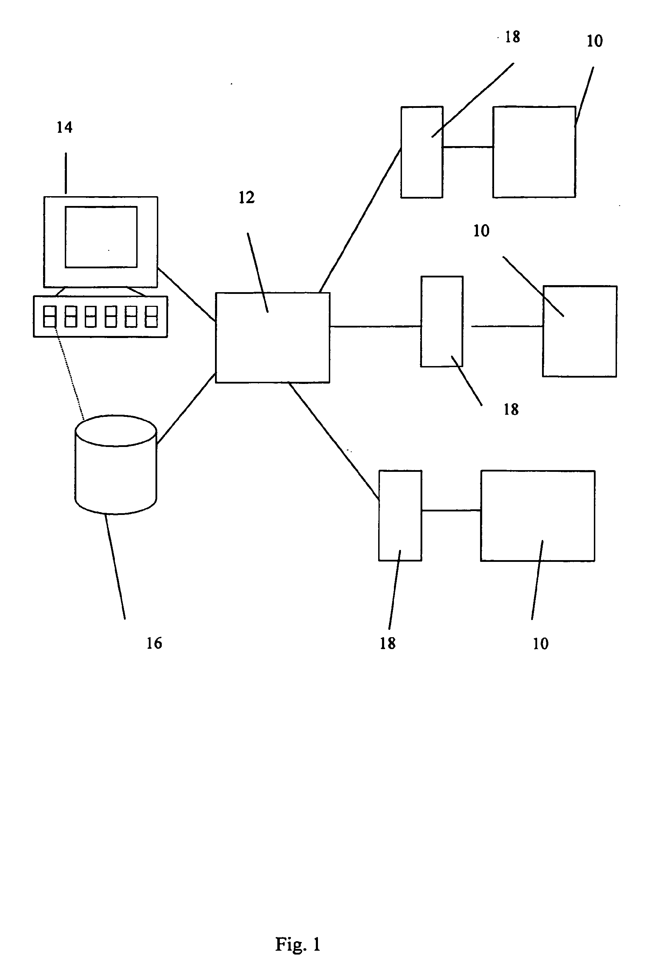

The overall concept of the present invention is illustrated in Fig. 1. A plurality of devices 10 are connected to a network controller 12 via sockets 18. The network controller functions according to rules set by a central network server 16. The central network server 16 can be located remotely, for example on a website, or it can be located within a hard drive of a home computer 14

A user of the system can set rules using application software which can be hosted on a home computer 14 or on

The network functions as an IP network, with each device having an individual IP address assigned to it.

The invention as illustrated in Fig. 1 can be implemented using any suitable type of network, however, it is particularly envisaged as being implemented with either a wired ethernet network, a wireless network (for example, one that conforms to the 802.11a communications protocol standard, or other 802.11 standards), or a data over mains network. The following description shall refer specifically to a wired ethernet solution, but one skilled in the art will realise that the concepts disclosed hereinafter can, where appropriate, be applied also to other types of networks.

Furthermore, the wired ethernet solution is preferably incorporated on a ethernet that is wired with CAT5 cable, but one skilled in the art will equally realise that the concepts can, where appropriate, be applied to other ethernet implementations, for example, the invention could equally apply to a CAT6 as to a CAT5 wired ethernet.

As will be described in more detail below, the devices 10 that are connected to the network can be controlled by a controller (not shown in Fig. 1) which interacts with the central network server 16 to control any device that is connected to the network.

Furthermore, the devices that are connected to the network are integrated such that data from one device can be transmitted over the network to be received and output by another device.

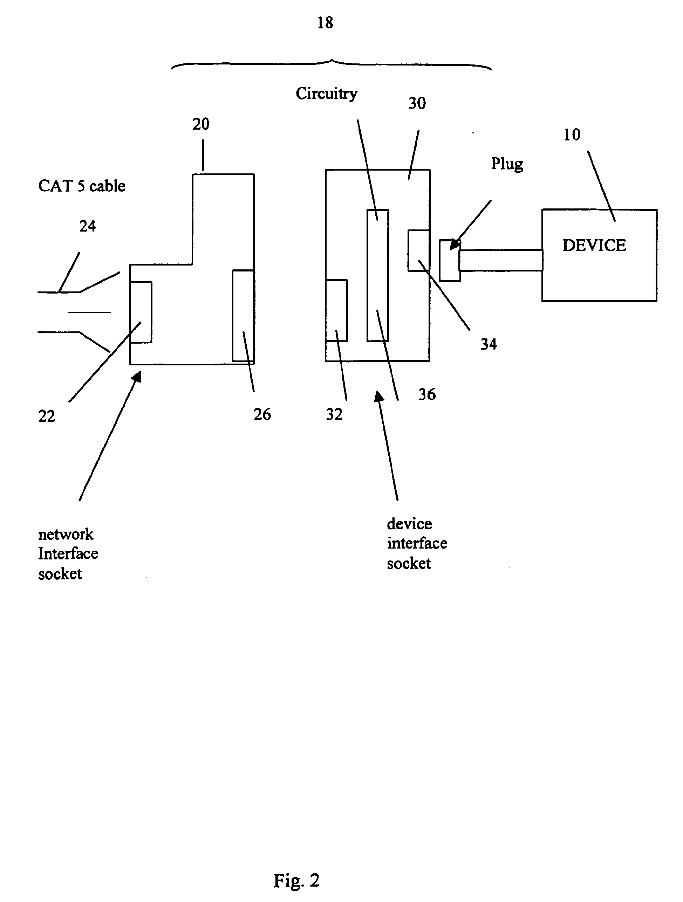

Fig. 2 illustrates a second embodiment of the invention, namely the sockets 18 that connect devices to the network.

Current ethernet terminations, such as a RJ-45 connector which is typically used to terminate a CAT5 cable network, comprise a faceplate and a connector to provide a uniform style of interface.

The present invention splits the functionality of a network termination, with a socket 18 comprising a separable network interface socket 20 and device interface socket 30.

The network interface socket 20 comprises a back end 22 to which a cable 24 is connected. The data and/or power that is transmitted over the cable 24 is presented at a front end 26 of the network interface socket 20.

The exact form of the back end 22 will depend on the type of network that the network interface socket 20 is to be used with. For example, the cable 24 could be a CAT5 cable, in which case the back end 22 would comprise a standard physical socket in which the signal wires of the cable would be terminated; or, in the case of a wireless network, the cable 24 is effectively a virtual cable, and the back end 22 would comprise an appropriate data signal receptor.

However, the front end 26 of the network interface socket 20 remains the same no matter what form of network the socket us used with, therefore the front end 26 presents a generic interface.

The device interface socket 30 comprises a back end 32 that connects with the front end 26 of the network interface socket 20, and a front end 34 that provides an interface for the connection of a device 10. The device interface socket 30 can also comprise specific circuitry 36. This circuitry 36 may be different for use in different formats of device interface socket 30. For example, if the device interface socket 30 is intended to be used to attach a DVD player to the network, the circuitry 36 may include means to convert a video data stream from analogue to digital (e.g. MPEG-2) format, for transmission over the IP network.

In this way, the device interface socket 30 can be available in a number of formats, each relating to a different type of device, while the back end 26 is common to all forms of the device interface socket, for uniform connection to the front end 26 of a network interface socket 20.

The device interface socket can also be provided in a form where there is no circuitry 36 provided, thus acting as a general purpose termination for devices 10 that already are equipped to deal with the function that would ordinarily be performed by the circuitry 36.

Thus, it can be seen that the network interface socket 30 has a functional corollary with a faceplate of a standard RJ-45 connector, and the device interface socket has a functional corollary with a connector portion of a standard RJ-45 connector.

However, as described above, the provision of distinct and interchangeable devices to perform these separate functions results in a socket 18 which provides a termination that is much more flexible in its use than a standard RJ-45 connector. A user of the system can plug an existing device 10 straight in to the IP based ethernet network.

The network controller 12 also comprises a PoE device so that, as well as data signals, power can be transmitted over the ethernet. Thus, the interfaces between the network and device interface socket 20, 30 provide a power interface, a media independent interface, and a control interface.

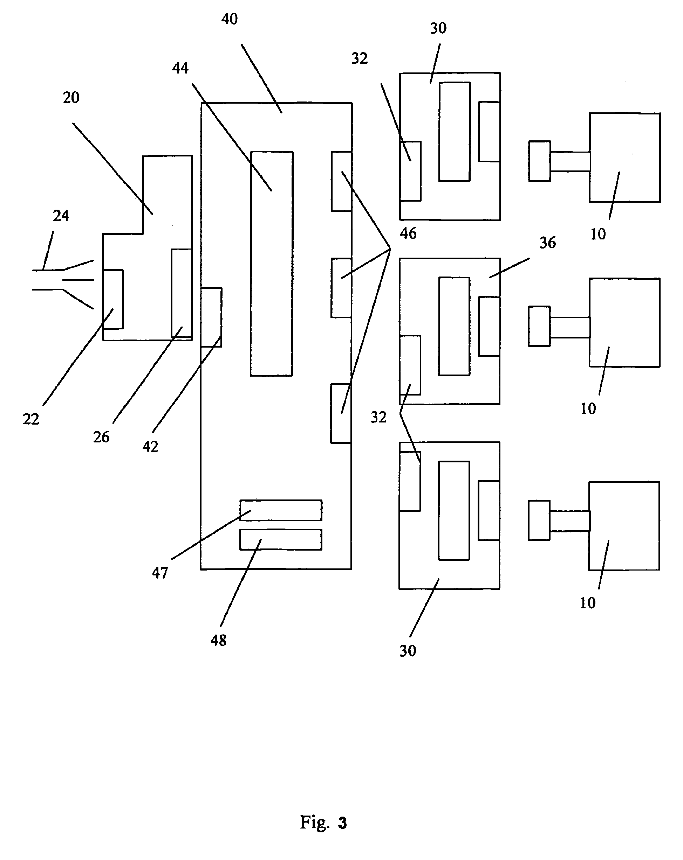

In a further aspect of this embodiment of the present invention, there is provided a multi-connection socket 40 which can gang together multiple device interface sockets 30. As shown in Fig. 3, the multi-connection socket 40 is provided with a back end 42 for connection to the front end 26 of a network interface socket 20, and a plurality of front end interfaces 46, each one being for connection to the back end 32 of a device interface socket 30. An ethernet switch 44 is provided between the back end 42 and the front end interface 46. This switch 44 ensures that a plurality of devices 10 that are connected to the multi-connection socket 40 can be operated within the context of the network in a fashion which mirrors the situation in which each device 10 was connected by an individual socket 18 comprising just one network interface socket 20 and one device interface socket 30 to the network.

The multi-connection socket 40 is particularly useful where a home or a business has a CAT5 cable infrastructure installed in the building, but where in one particular room there are not enough CAT5 sockets to accommodate every device in the room. The function of the multi-connection socket 40 is analogous to a standard mains socket gang, but the addition of the switch 44 gives the multi-connection socket 40 true network flexibility.

PoE is only suited to providing a relatively low power level, typically up to a maximum of thirteen Watts. Thus, if multiple devices are connected to the multi-connection socket 40 that need to draw power, there is a danger that the system could get overloaded. To help guard against this, the multi-connection socket 40 is provided with a power meter 47, in the form of a bar LED, to give an indication of the proportion of the maximum available power that is being consumed.

The multi-connection socket 40 is also provided with a bandwidth meter 48, which is also in the form of a bar LED, and gives an indication of the proportion of the available bandwidth that is being consumed by the device interface sockets 30 that are installed in the multi-connection socket 40.

If a device to be connected to the front end 34 of any device interface socket 30 needs more power than can be supplied by PoE, this can be provided by a wall wart.

Of course, while Fig. 3 shows a multi-connection socket for the connection of up to three device interface sockets 30, it will be appreciated that a multi-connection socket could be provided that would be suitable for accommodating a different number of device interface sockets.

The above described sockets 18, together with the network, provides an effective means for connecting multiple devices 10 with great flexibility. The device interface socket 30 can be used in conjunction with a standard sized and shaped socket enclosure that can be either surface mounted or buried, or it can be used in conjunction with a multi-connection socket 40. These are many different applications in which devices 10 can be connected using the above-described methods, and some examples are now given. These examples are in no way intended to serve as being an exhaustive list of the applications of these methods. Furthermore, additional aspects and features of the socket 18 will become apparent from the remaining portions of the description.

Firstly, the present invention could be incorporated alongside existing network access devices. In this case, the functionality of the network controller 12 can be provided by a commercially available ethernet switch. The application software of the present invention would provide the instructions and perform controlling calculations to correctly manipulate the switch.

In a further application, the PoE functionality of the present invention may be used to power a VOIP socket for incorporation into a telephone network. The PoE functionality could also be used to power low-wattage speakers. The system could for example, pipe stereo IP streams from a stereo system in a lounge through to speakers in a kitchen.

Both video and audio signals can be flexibly manipulated by the present invention.

The present invention can also be used to provide a thin PC interface, allowing the PC system box to be located in one room while leaving the screen, keyboard and mouse in another room. Similarly, presentations from slides on a computer file can be shown via a projector without having to bring a laptop to the actual presentation.

A thin game interface can also be provided so that console based computer games can be played at a location that is remote from the location of the actual console. In this case, a game controller can be attached to the front end 34 of a device interface socket 30.

The present invention may also be used in a security environment, wherein a video power and control interface can be provided so that existing analogue security video cameras and telemetry devices can be integrated into a standard sized socket and connected to the IP network.

In a third embodiment of the present invention, a control device is provided that is capable of controlling all the devices 10 that are connected to the network. The control device can be provided in a number for forms, but each form uses the same concept of using a server based remote control mechanism. Current "all in one" remote controls have to be programmed with the correct control codes to drive a limited number of devices. The present invention incorporates the concept of obtaining the control codes from a remote server, thus enabling more flexible control of a greater number of devices, and enabling the controller to adapt to be able to control devices that are added to the network.

These are two methods by which it is particularly envisaged that the remote control will function.

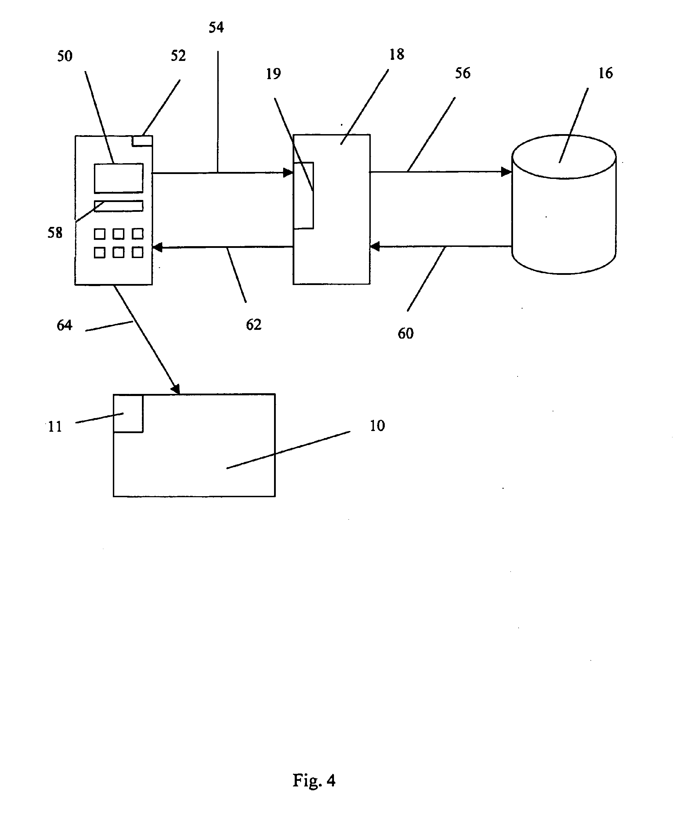

One of these methods is illustrated in Fig. 4, which shows how an individual command for a device 10 is transmitted via a three-way handshake mechanism. Say, for example, the controller 50 is to be used to play a disk on a DVD player 10. A generic "pay" button is pressed on the controller 50 and a generic play command 54 is sent as an IR signal from the IR transceiver 52 of the controller 50 to an IR transceiver 19 contained in the socket 18. This can suitably be incorporated into a device interface socket 30. This generic command 54 is then interpreted and transmitted over the network (56) to the central network server 16. This transmission 56 corresponds to a request for the control codes for the particular device that it is desired to control. The controller has a media selection means 58, in which the type of device to be played is selected; and the central network server can determine the location of the controller 50 by means of interpreting which socket 18 the request 56 has been sent from. The central network server 16 contains a database (not shown) of control codes, and it correlates this with a database (not shown) of device locations to transmit the control codes over the network (60) to the socket 18, which then transmits the codes via its IR transceiver 19 to the controller 50. (62). The controller 50 then transmits the correctly coded play signal 64 to the DVD player 10. From the IR transceiver 52 of the controller 50 to the IR transceiver 11 of the DVD player 10. This dynamic three-way handshake process takes place at a speed that is transparent to the user.

The second method that is particularly envisaged as being applied within the scope of the present invention does not implement a three way handshake procedure, but still uses the same server based controller concepts.

In this method, the controller communicates with an IR transponder to download control codes for all devices connected to the network. The controller then communicates with an IR transponder to tell the server which location it is in, so that the server can download all device control codes that are relevant to that location. These control codes are then used by the controller in a standard fashion to control the devices that are in that location. The controller of this method thus has less codes to store at any one time than would be the case with a standard "all in one", and also has the added flexibility of being able to be taken from one location where it is able to control a set of devices, to another location where it is able to control a completely different set of devices.

Devices that are added to the network can also be controlled by the remote, as the data is stored primarily on the databases of the server.

The controllers of both the above methods can be implemented in a number of physical formats, for example, a basic controller could have a similar appearance to that of a conventional standard controller, or a conventional standard controller could be provided with an additional LCD screen, through which the abovementioned media selection means could be provided. A microphone could also be incorporated into a controller to enable voice recognition technology to be used.

Alternatively, the controller could take a form similar to a PDA device. This option provides a relatively large amount of memory for storage of device control codes, and also allows for maximum possible flexibility of the system, with a full GUI control interface enabling inter-device media stream cross-over by means of a drag and drop icon manipulation interface. Taking the example of a number of media devices linked in a home environment, the interface will show an outline of the home with all the available devices and services. Simply selecting a specific device and service and dragging this to the appropriate end device will enable the controller to send appropriate signals such that media flow is enabled between the chosen source and destination.

This embodiment of the present invention also provides for an optical IR control multiplexor. This is a device that allows the device interface socket to send IR signals to the device, while still allowing the native controller supplied with the device to be used.

The multiplexor comprises a body attached by an fibre optic cable to a device interface socket. Specifically, a socket 18 is provided with an IR port (not shown) which is capable of driving a remote LED, the signals being passed along the fibre optic cable. Typically, a device interface socket will be located at a wall. The body of the multiplexor is then positioned over the IR receiver of the device to be controlled. The body comprises a clear front face which allows the device to receive signals from its native controller, and also a reflective surface to reflect a command signal originating from the device interface socket into the device's IR receiver.

The multiplexor is also used in the cases referred to above, where a user wants to control a device that is located in a physically separate room to the one he is in.

The concepts of this invention can also be extended to control devices that are located on different networks. In this case, a plurality of networks as have been thusfar described can be connected to the internet, and the above methods can be logically extended to deal with this.

This functionality can be useful, for example, for giving presentations, where a presentation stored on a presenter's PC hard drive, located on the presenter's network, can be played through the audience's projector, connected to the audience's network. Similarly, a user can play media from a music library in one home through a hi-fi located in another home.

The present invention also provides for server management software to co-ordinate the abovementioned activities. This server management software can be supplied as a computer program that is run on a user's PC, or can be located on a remote internet site.

The software can have a wide range of components and functions, including among others;
- a remote control codes database;
- a network device database which stores details of the capabilities of the various devices that are connected to the network;
- a media user database that stores user preferences and habits of users of the devices on the network;
- a home device manager for controlling the configuration of the devices;
- routing control, to control the ethernet switches and ensure security of the connections;
- spatial and temporal licensing of media distribution - the present invention provides for the creation of "micro-licences," namely the flexibility to control access to each individual device. This can be useful for controlling or charging for access to certain media;
- parental control functions; and
- distribution of incoming satellite or cable channels over an IP structure. An incoming bouquet of satellite or cable television signals, as is received by an aerial, contains a large number of carrier frequencies, each of which typically corresponds to a specific television channel. A standard television picks out a single carrier frequency for display. However, by means of the present invention, multiple carrier frequencies can be picked out and simultaneously displayed over a multiplicity of devices.

Various improvements and modifications may be made to the above without departing from the scope of the present invention.

## Claims

1. A method for controlling a plurality of devices (10 comprising the steps of:
connecting the devices (10) to a network through a socket (18) which comprises a network interface component (20) and a device interface component (30);
assigning an internet protocol (IP) address to each device (10);
administering the functions of the network by means of a central network server (16); and
providing controller means (14) for controlling at least one of the devices (10);
such that device control signals and device data signals can pass over the network; and wherein
software is provided which functions as a user control interface to enable a user to manipulate the central network server (16) to control the devices (10),
said software further enabling individual carrier frequencies to be picked out from a bouquet of incoming television signals such that a plurality of television channels can be simultaneously distributed to separate devices (10).

2. The method of claim 1, wherein the data signals from one device (10) are transmitted over the network to be received and output by another device (10).

3. The method of any preceding claim, wherein the network is a wired local area network.

4. The method of any of claims 1-2, wherein the network is a data over mains network.

5. The method of any of claims 1-2, wherein the network is a wireless network.

6. The method of any preceding claim, wherein the socket (18) is substantially flush with a wall.

7. The method of any preceding claim, wherein the device interface component (30) is of a suitable form for the attachment of a device (10) to the network without any modification having to be performed to the devicev(10).

8. The method of any preceding claim, wherein the devices (10) are electronic devices.

9. A system for controlling a plurality of devices (10) comprising;
a network for interconnecting the devices (10);
a central network server (16) for assigning an internet protocol (IP) address to each device (10);
a socket (18) comprising a network interface component (20) and a device interface component (30), with each device (10) being connectable to a socket (18); and
controller means (14) for controlling at least one of the devices (10); and wherein
device control signals and device data signals are capable of being passed over the network,
said system further comprising software which functions as a user control interface to enable a user to manipulate the central network server (16) to control the devices (10),
wherein the soflware is capable to enable individual carrier frequencies to be picked out from a bouquet of incoming television signals such that a plurality of television signals can be simultaneously distributed to separate devices (10).

10. The system of claim 9, wherein the network is capable to transmit the data signals from one device (10) to be received and outputed by another device (10).

11. The system of any of claims 9-10, wherein the network is a wired local area network.

12. The system of any of claims 9-10, wherein the network is a data over mains network.

13. The system of any of claims 9-10, wherein the network is a wireless network.

14. The system of any of claims 9-13, wherein the socket (18) is substantially flush with a wall.

15. The system of any of claims 9-14, wherein the device interface component (30) is of a suitable form for the attachment of a device (10) to the network without any modification having to be performed to the device (10).

16. The system of any of claims 9-15, wherein the devices (10) are electronic devices.

## Patentansprüche

1. Ein Verfahren zum Steuern einer Vielzahl von Geräten (10), das die folgenden Schritte beinhaltet:
Verbinden der Geräte (10) mit einem Netzwerk über eine Fassung (18), die eine Netzwerkschnittstellenkomponente (20) und eine Geräteschnittstellenkomponente (30) beinhaltet;
Zuweisen einer Internet-Protokoll-Adresse (IP-Adresse) an jedes Gerät (10);
Verwalten der Funktionen des Netzwerks mittels eines Zentralnetzwerkservers (16); und
Bereitstellen eines Steuereinheitsmittels (14) zum Steuern von mindestens einem der Geräte (10);
so dass Gerätesteuersignale und Gerätedatensignale über das Netzwerk geschickt werden können; und wobei
Software bereitgestellt ist, die als eine Benutzersteuerschnittstelle funktioniert, um es einem Benutzer zu ermöglichen, den Zentralnetzwerkserver (16) zu manipulieren, um die Geräte (10) zu steuern,
wobei es die Software ferner ermöglicht, dass individuelle Trägerfrequenzen aus einem Bündel an ankommenden Fernsehsignalen ausgewählt werden können, so dass eine Vielzahl von Fernsehkanälen gleichzeitig an separate Geräte (10) verteilt werden kann.

2. Verfahren gemäß Anspruch 1, wobei die Datensignale von einem Gerät (10) über das Netzwerk übertragen werden, um von einem anderen Gerät (10) empfangen und ausgegeben zu werden.

3. Verfahren gemäß einem der vorhergehenden Ansprüche, wobei das Netzwerk ein lokales Drahtnetzwerk ist.

4. Verfahren gemäß einem der Ansprüche 1-2, wobei das Netzwerk ein Daten-über-Netz-Netzwerk ist.

5. Verfahren gemäß einem der Ansprüche 1-2, wobei das Netzwerk ein drahtloses Netzwerk ist.

6. Verfahren gemäß einem der vorhergehenden Ansprüche, wobei die Fassung (18) im Wesentlichen eben mit einer Wand ist.

7. Verfahren gemäß einem der vorhergehenden Ansprüche, wobei die Geräteschnittstellenkomponente (30) eine geeignete Form zum Verknüpfen eines Geräts (10) mit dem Netzwerk hat, ohne dass eine Änderung an dem Gerät (10) vorgenommen werden muss.

8. Verfahren gemäß einem der vorhergehenden Ansprüche, wobei die Geräte (10) elektronische Geräte sind.

9. Ein System zum Steuern einer Vielzahl von Geräten (10), das Folgendes beinhaltet:
ein Netzwerk zum Verbinden der Geräte (10) untereinander;
einen Zentralnetzwerkserver (16) zum Zuweisen einer Internet-Protokoll-Adresse (IP-Adresse) an jedes Gerät (10);
eine Fassung (18), die eine Netzwerkschnittstellenkomponente (20) und eine Geräteschnittstellenkomponente (30) beinhaltet, wobei jedes Gerät (10) mit einer Fassung (18) verbunden werden kann; und
ein Steuereinheitsmittel (14) zum Steuern von mindestens einem der Geräte (10); und wobei
Gerätesteuersignale und Gerätedatensignale in der Lage sind, über das Netzwerk verschickt werden zu können,
wobei das System ferner Software beinhaltet, die als eine Benutzersteuerschnittstelle funktioniert, um es einem Benutzer zu ermöglichen, den Zentralnetzwerkserver (16) zu manipulieren, um die Geräte (10) zu steuern,
wobei die Software in der Lage ist, zu ermöglichen, dass individuelle Trägerfrequenzen aus einem Bündel an ankommenden Fernsehsignalen ausgewählt werden können, so dass eine Vielzahl von Fernsehsignalen gleichzeitig an separate Geräte (10) verteilt werden kann.

10. Verfahren gemäß Anspruch 9, wobei das Netzwerk in der Lage ist, die Datensignale von einem Gerät (10) zu übertragen, um von einem anderen Gerät (10) empfangen und ausgegeben zu werden.

11. System gemäß einem der Ansprüche 9-10, wobei das Netzwerk ein lokales Drahtnetzwerk ist.

12. System gemäß einem der Ansprüche 9-10, wobei das Netzwerk ein Daten-über-Netz-Netzwerk ist.

13. System gemäß einem der Ansprüche 9-10, wobei das Netzwerk ein drahtloses Netzwerk ist.

14. System gemäß einem der Ansprüche 9-13, wobei die Fassung (18) im Wesentlichen eben mit einer Wand ist.

15. System gemäß einem der Ansprüche 9-14, wobei die Geräteschnittstellenkomponente (30) eine geeignete Form zum Verknüpfen eines Geräts (10) mit dem Netzwerk hat, ohne dass eine Änderung an dem Gerät (10) vorgenommen werden muss.

16. System gemäß einem der Ansprüche 9-15, wobei die Geräte (10) elektronische Geräte sind.

## Revendications

1. Un procédé pour commander une pluralité de dispositifs (10) comprenant les étapes consistant à :
connecter les dispositifs (10) à un réseau par le biais d'un support (18) qui comprend un composant d'interface réseau (20) et un composant d'interface dispositif (30) ;
assigner une adresse de protocole internet (PI) à chaque dispositif (10) ;
administrer les fonctions du réseau au moyen d'un serveur de réseau central (16) ; et
fournir un moyen formant organe de commande (14) pour commander au moins l'un des dispositifs (10) ;
de telle sorte que des signaux de commande de dispositif et des signaux de données de dispositif puissent passer sur le réseau ; et dans lequel
un logiciel est fourni, lequel fonctionne en tant qu'interface de commande utilisateur afin de permettre à un utilisateur de manipuler le serveur de réseau central (16) pour commander les dispositifs (10),
ledit logiciel permettant en outre à des fréquences porteuses individuelles d'être choisies dans un bouquet de signaux de télévision entrants de telle sorte qu'une pluralité de chaînes de télévision puissent être distribuées simultanément à des dispositifs (10) distincts.

2. Le procédé de la revendication 1, dans lequel les signaux de données provenant d'un dispositif (10) sont transmis sur le réseau de façon à ce qu'ils soient reçus et sortis par un autre dispositif (10).

3. Le procédé de n'importe quelle revendication précédente, dans lequel le réseau est un réseau zonal local câblé.

4. Le procédé de n'importe lesquelles des revendications 1 à 2, dans lequel le réseau est un réseau de données sur secteur.

5. Le procédé de n'importe lesquelles des revendications 1 à 2, dans lequel le réseau est un réseau sans fil.

6. Le procédé de n'importe quelle revendication précédente, dans lequel le support (18) est substantiellement au même niveau qu'une paroi.

7. Le procédé de n'importe quelle revendication précédente, dans lequel le composant d'interface de dispositif (30) est d'une forme qui convient pour attacher un dispositif (10) au réseau sans qu'une modification quelconque ne doive être apportée au dispositif (10).

8. Le procédé de n'importe quelle revendication précédente, dans lequel les dispositifs (10) sont des dispositifs électroniques.

9. Un système pour commander une pluralité de dispositifs (10) comprenant :
un réseau pour interconnecter les dispositifs (10) ;
un serveur de réseau central (16) pour assigner une adresse de protocole internet (PI) à chaque dispositif (10) ;
un support (18) comprenant un composant d'interface réseau (20) et un composant d'interface dispositif (30), chaque dispositif (10) pouvant être connecté à un support (18) ; et
un moyen formant organe de commande (14) pour commander au moins l'un des dispositifs (10) ; et dans lequel
des signaux de commande de dispositif et des signaux de données de dispositif sont à même d'être passés sur le réseau,
ledit système comprenant en outre un logiciel qui fonctionne en tant qu'interface de commande utilisateur afin de permettre à un utilisateur de manipuler le serveur de réseau central (16) pour commander les dispositifs (10),
dans lequel le logiciel est à même de permettre à des fréquences porteuses individuelles d'être choisies dans un bouquet de signaux de télévision entrants de telle sorte qu'une pluralité de signaux de télévision puissent être distribués simultanément à des dispositifs (10) distincts.

10. Le système de la revendication 9, dans lequel le réseau est à même de transmettre les signaux de données provenant d'un dispositif (10) de façon à ce qu'ils soient reçus et sortis par un autre dispositif (10).

11. Le système de n'importe lesquelles des revendications 9 à 10, dans lequel le réseau est un réseau zonal local câblé.

12. Le système de n'importe lesquelles des revendications 9 à 10, dans lequel le réseau est un réseau de données sur secteur.

13. Le système de n'importe lesquelles des revendications 9 à 10, dans lequel le réseau est un réseau sans fil.

14. Le système de n'importe lesquelles des revendications 9 à 13, dans lequel le support (18) est substantiellement au même niveau qu'une paroi.

15. Le système de n'importe lesquelles des revendications 9 à 14, dans lequel le composant d'interface de dispositif (30) est d'une forme qui convient pour attacher un dispositif (10) au réseau sans qu'une modification quelconque ne doive être apportée au dispositif (10).

16. Le système de n'importe lesquelles des revendications 9 à 15, dans lequel les dispositifs (10) sont des dispositifs électroniques.
